# EUROPEAN PATENT APPLICATION

(11) **EP 4 796 764 A1**
(43) Date of publication of application: **26.08.2026**
(21) Application number: 26158224.1
(22) Date of filing: 12.02.2026
(51) Int. Cl.: F01M 11/12, F16N 29/04

(54) **APPARATUS AND METHOD FOR MONITORING A LUBRICATION SYSTEM OF AN AIRCRAFT POWER PLANT**

(30) Priority: 21.02.2025 US 202519060047
(71) Applicant: Pratt & Whitney Canada Corp., (01BE5) Longueuil, QC J4G 1A1 (CA)
(72) Inventor: HANNA, Michael, Beaconsfield (CA)
(74) Representative: Dehns

(57) **Abstract**

Apparatus and methods of monitoring a lubrication system (12) of an aircraft power plant are provided. The apparatus and method can detect a human error associated with servicing an aircraft engine. The method includes sensing an actual oil level (34) in an oil tank (26) of the lubrication system (12) of the aircraft power plant, and determining that the actual oil level (34) is below a habitual replenish level (54) that is higher than a minimum operating oil level for the oil tank (26). When the actual oil level (34) is below the habitual replenish level (54) an alert is generated.

## Description

### TECHNICAL FIELD

The disclosure relates generally to aircraft power plants, and more particularly to servicing aircraft power plants.

### BACKGROUND

An aircraft engine typically has a lubrication system to meet the lubrication and cooling needs of various components of the engine. The lubrication system delivers oil from an oil tank to various components of the aircraft engine, recovers the used oil from the components, filters and cools the oil, returns the recovered used oil back to the oil tank, and then reuses the oil. Maintaining an oil level in the oil tank above a minimum operating level is important for the proper operation of the aircraft engine. The oil level of an aircraft engine is typically verified by maintenance personnel at regular intervals and replenished as needed. Reducing the risk of human error leading to inadequate servicing of an aircraft engine is desirable.

### SUMMARY

In one aspect, the disclosure describes an apparatus for monitoring a lubrication system of an aircraft power plant. The apparatus comprises: a sensor operable to sense an actual oil level in an oil tank of the lubrication system of the aircraft power plant; an annunciator; and one or more computers in communication with the sensor and with the annunciator, the one or more computers being operable to: determine that the actual oil level sensed by the sensor is below a habitual replenish level that is higher than a minimum operating level for the oil tank, the habitual replenish level being an oil level in the oil tank at which the oil tank is habitually replenished with oil based on a service history relevant to the aircraft power plant; and when the actual oil level is below the habitual replenish level and above the minimum operating level, cause the annunciator to output an alert.

The one or more computers may be operable to, before determining that the actual oil level is below the habitual replenish level, determine the habitual replenish level as a function of an amount of utilization of the aircraft power plant that is associated with the actual oil level.

Determining the habitual replenish level as a function of the amount of utilization may include retrieving, using the one or more computers, the habitual replenish level from a digital schedule relating the amount of utilization to the habitual replenish level.

Determining that the actual oil level is below the habitual replenish level may include executing, by the computer, a machine learning algorithm that relates the amount of utilization and the actual oil level to a need for replenishing the oil. The machine learning algorithm may have been trained using machine learning on the service history. The service history may include previous amounts of utilization and previous oil levels at which the oil was replenished.

The one or more computers may be operable to train the machine learning algorithm on the service history.

The service history relevant to the aircraft power plant may include a service history of the aircraft power plant.

The service history relevant to the aircraft power plant may include a service history of another aircraft power plant.

The one or more computers may be operable to, before determining that the actual oil level is below the habitual replenish level, determine the habitual replenish level based on the service history.

The service history may include a previous replenish level corresponding to a previous oil level at which the oil tank or another oil tank of another aircraft power plant was replenished with oil.

The one or more computers may be operable to determine the previous replenish level by identifying a local minimum among a plurality of previous oil levels.

Embodiments may include combinations of the above features.

In another aspect, the disclosure describes a lubrication system of an aircraft power plant. The lubrication system comprises: an oil tank operatively connected to supply oil to one or more lubrication loads of the aircraft power plant; a sensor operable to sense an actual oil level in the oil tank; an annunciator; one or more data processors in communication with the sensor and with the annunciator; and non-transitory machine-readable memory storing: data indicative of an oil replenishing history applicable to the aircraft power plant; and instructions executable by the one or more data processors and configured to cause the one or more data processors to, when the actual oil level is inconsistent with the oil replenishing history, cause the annunciator to output an alert.

The instructions may be configured to cause the one or more data processors to: before determining that the actual oil level is inconsistent with the oil replenishing history, determine a habitual replenish level as a function of an amount of utilization of the aircraft power plant that is associated with the actual oil level; and determine that the actual oil level is below the habitual replenish level.

The instructions may be configured to cause the one or more data processors to determine the habitual replenish level by retrieving the habitual replenish level from a digital schedule stored in the non-transitory machine-readable memory and that relates the amount of utilization to the habitual replenish level.

The instructions may be configured to cause the one or more data processors to, determine that the actual oil level is below the habitual replenish level by executing a machine learning algorithm that relates the amount of utilization and the actual oil level to a need for replenishing the oil. The machine learning algorithm may have been trained using machine learning on the oil replenishing history.

Embodiments may include combinations of the above features.

In a further aspect, the disclosure describes a method of monitoring a lubrication system of an aircraft power plant. The method comprises: sensing, with a sensor, an actual oil level in an oil tank of the lubrication system of the aircraft power plant; receiving, at a computer, data indicative of the actual oil level in the oil tank sensed by the sensor; determining, with the computer, that the actual oil level is below a habitual replenish level higher than a minimum operating oil level for the oil tank, the habitual replenish level being an oil level in the oil tank at which the oil tank is habitually replenished with oil based on an oil replenishing history relevant to the aircraft power plant; when the actual oil level is below the habitual replenish level and higher than the minimum operating oil level, generate, with the computer, an output indicative of the lubrication system requiring service; and in response to the output from the computer, annunciating an alert.

The method may include: receiving, at the computer, data indicative of an amount of utilization of the aircraft power plant that is associated with the actual oil level; and before determining that the actual oil level is below the habitual replenish level, determining, with the computer, the habitual replenish level as a function of the amount of utilization.

The method may include retrieving, by the computer, the habitual replenish level from a digital schedule relating the amount of utilization to the habitual replenish level.

Determining that the actual oil level is below the habitual replenish level may include executing, by the computer, a machine learning algorithm that relates the amount of utilization and the actual oil level to a need for replenishing the oil. The machine learning algorithm may have been trained using machine learning on the oil replenishing history.

The method may include training, with the computer, the machine learning algorithm on the oil replenishing history.

The oil replenishing history may include previous amounts of utilization and previous oil levels at which the oil was replenished. The method may include identifying, with the computer, previous oil levels at which the oil was replenished.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 schematically shows an axial cross-section of an exemplary aircraft power plant including a lubrication system that is operatively connected to an exemplary apparatus for monitoring the lubrication system;
FIG. 2 is a schematic representation of the apparatus for monitoring the lubrication system of the aircraft power plant of FIG. 1;
FIG. 3 is a flow diagram of an exemplary method of monitoring the lubrication system of the aircraft power plant;
FIG. 4 is a schematic representation of an exemplary sensor operable to sense an actual oil level in an oil tank of the lubrication system of the aircraft power plant;
FIG. 5 shows a table of an exemplary oil replenishing history that is relevant to the lubrication system of the aircraft power plant;
FIG. 6 shows a plot providing a graphical representation of the exemplary oil replenishing history of FIG. 5;
FIG. 7 shows a table of an exemplary schedule relating amounts of utilization of the aircraft powerplant to habitual replenish levels at which the oil tank is expected to be replenished with oil; and
FIG. 8 schematically shows an exemplary machine learning algorithm that relates the amount of utilization of the aircraft power plant and the actual oil level to a need for replenishing the oil.

### DETAILED DESCRIPTION

The disclosure describes apparatus and methods for monitoring lubrication systems of aircraft power plants. In some embodiments, the apparatus and methods described herein promote safe and reliable operation of aircraft power plants by reducing risks of human error leading to inadequate servicing of aircraft power plants. For example, the apparatus and methods described herein may reduce a likelihood of a lubricating system of the aircraft power plant being starved of oil due to inadequate servicing of the aircraft power plant.

In some embodiments, the apparatus and methods described herein may avoid complexities associated with trying to estimate an expected oil consumption of the aircraft power plant. However, the apparatus and methods described herein may indirectly take into consideration the expected oil consumption of the aircraft power plant that is inherently captured by the servicing habits of maintenance personnel. Trends in oil-replenishing habits may be used to derive an expected oil consumption for the aircraft power plant.

An oil level in an oil tank of a lubrication system of the aircraft power plant may be visually inspected by maintenance personnel at regular intervals (e.g., via a sight glass or dipstick) as recommended by a manufacturer and/or operator of the aircraft power plant. Based on the visual inspection, the oil tank may be replenished with oil as needed. Even though the oil level in the oil tank may be above a minimum operating level for the aircraft power plant, maintenance personnel may nevertheless replenish the oil to ensure that the amount of oil in the oil tank is sufficient for the aircraft power plant to complete the next flight cycle, and/or to last until the next inspection. In other words, maintenance personnel that is familiar with the oil consumption of the aircraft power plant may replenish the oil in a manner that ensures that the oil level will not dip below the minimum operating level during the next flight cycle and/or until the next inspection. For example, maintenance personnel may replenish the oil even though the oil level has not yet reached the minimum operating level based on an oil consumption that is expected by maintenance personnel for the next flight cycle. Accordingly, the oil replenishing habits of maintenance personnel according to maintenance plans and service schedules may inherently capture the oil consumption of the aircraft power plant based on the type(s) of mission(s) that is/are executed with the aircraft power plant.

The apparatus and methods described herein may detect a potential human error in servicing the aircraft power plant by detecting an oil level that is inconsistent with an oil replenishing history relevant to the aircraft power plant. Aspects of various embodiments are described through reference to the drawings.

The term "connected" may include both direct connection (in which two elements contact each other) and indirect connection (in which at least one additional element is located between the two elements). As used herein, the singular forms "a," "an," and "the" are intended to include the plural forms as well, unless the context clearly indicates otherwise.

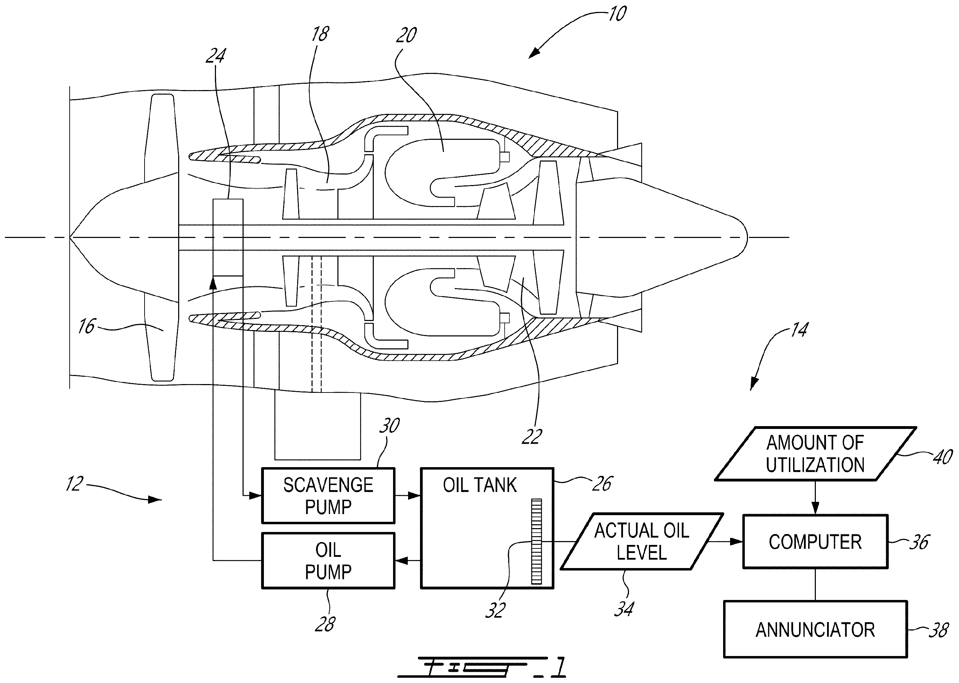

FIG. 1 schematically shows an axial cross-section of an exemplary aircraft power plant 10 (referred hereinafter as "power plant 10") including lubrication system 12 that includes and/or that is operatively connected to an exemplary apparatus 14 for monitoring lubrication system 12. In some embodiments, power plant 10 may include a thermal engine such as a gas turbine engine of a turbofan type as shown in FIG. 1 and preferably provided for use in subsonic flight, generally including in serial flow communication, fan 16 through which ambient air is propelled, multistage compressor 18 for pressurizing the air, combustor 20 in which the compressed air is mixed with fuel and ignited for generating an annular stream of hot combustion gases, and turbine section 22 for extracting energy from the combustion gases. Other types of gas turbine engines such as a turboprop engine or a turbojet engine may be suitable.

In some embodiments, power plant 10 may include a thermal engine such as a continuous combustion engine (e.g., gas turbine engine), or an intermittent combustion engine such as a Wankel engine or a piston engine. In some embodiments, power plant 10 may be a hybrid power plant including a heat engine and an electric motor that cooperatively drive an air mover such as fan 16 or a propeller for example. In some embodiments, power plant 10 may be an electric power plant that is devoid of a heat engine but that includes one or more electric motors drivingly connected to one or more air movers configured to propel the aircraft.

Power plant 10 may be mounted to a fixed-wing aircraft or to a rotary-wing aircraft such as a helicopter. Power plant 10 may be configured to propel the aircraft and may be mounted to a wing or a fuselage of the aircraft for example. Alternatively, power plant 10 may be an auxiliary power unit (APU) disposed inside an aircraft's tail and perform non-propulsion functions exclusively.

Lubrication system 12 may be configured to service one or more lubrication loads 24 (referred hereinafter in the singular) of power plant 10. Lubrication load 24 may include one or more bearings and/or gears that require lubrication and/or cooling. Lubrication system 12 may include one or more oil tanks 26 (referred hereinafter in the singular) and one or more supply pressure oil pumps 28 (referred hereinafter in the singular as "oil pump 28") in fluid communication with oil tank 26. Oil tank 26 may be operatively connected to supply oil to lubrication load 24. Oil tank 26 may be disposed at any suitable location relative to power plant 10. For example, oil tank 26 may be disposed in an internal, upper, lower or lateral region of power plant 10. Oil tank 26 may be disposed proximate to power plant 10. Oil pump 28 may be operatively connected to supply oil from oil tank 26 to lubrication load 24 of power plant 10.

Lubrication system 12 may include one or more scavenge oil pumps 30 (referred hereinafter in the singular as "scavenge pump 30") that may drive used oil collected in one or more oil sumps of power plant 10 back to oil tank 26 for recirculation. It is understood that some embodiments of lubrication system 12 may include components additional to those illustrated herein. Oil pump 28 and scavenge pump 30 may include gear type, gear-rotor type or other suitable type of oil pump. Oil pump 28 and scavenge pump 30 may be driven by any suitable motive power source such as electric motor(s), hydraulic motor(s), pneumatic motor(s) and/or one or more rotating/driven shafts of power plant 10 being drivingly coupled to oil pump 28 and/or to scavenge pump 30 via an accessory gearbox for example.

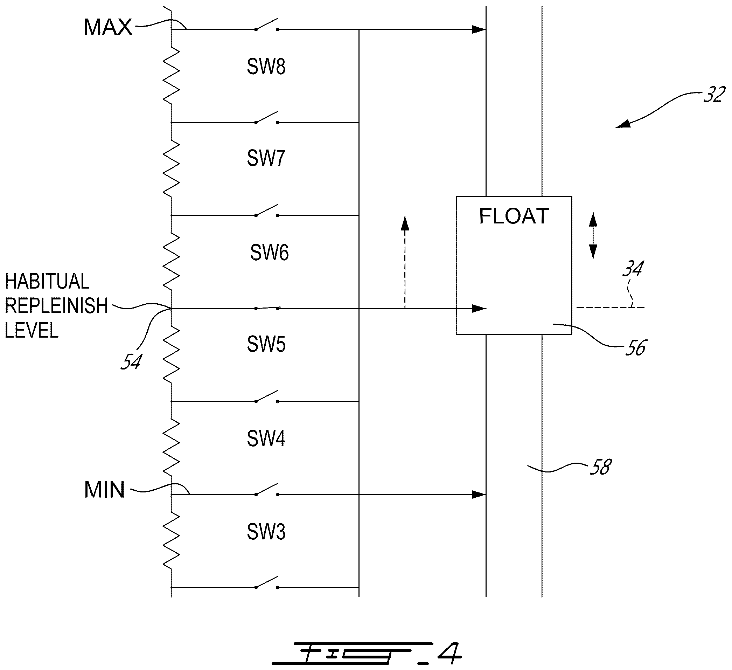

Apparatus 14 for monitoring lubrication system 12 may include one or more oil sensors 32 (referred hereinafter in the singular) operable to sense actual oil level 34 in oil tank 26 of lubrication system 12. In various embodiments, oil sensor 32 may include a capacitance probe, a Reed switch level sensor, and/or liquid level float switches as shown in FIG. 4 as an example. During flight, the oil level may vary as the attitude, such as pitch, roll, and yaw, of the aircraft changes. Having oil sensors 32 disposed at different discrete sensing locations may allow variations in oil level due to attitude of the aircraft to be accounted for. For the purpose of recording the oil replenishing history, measuring actual oil level 34 when the aircraft is on the ground and substantially leveled may be sufficient.

Some or all elements of apparatus 14 may be located onboard the aircraft that includes power plant 10. In some embodiments, some elements of apparatus 14 may be located remotely of the aircraft such as at a ground-based facility for example. Actual oil level 34 may be communicated to one or more computers 36 (referred hereinafter in the singular) via wired or wireless communication. Apparatus 14 may include annunciator 38 in communication with computer 36 via wired or wireless communication. Annunciator 38 may be disposed onboard the aircraft and serve to notify the flight crew if needed. In some embodiments, annunciator 38 may include a display device or other indicator disposed on the flight deck of the aircraft and operable to alert the flight crew via a visual indication. In some embodiments, annunciator 38 may include a loudspeaker operable to alert the flight crew via an aural indication. Alternatively or in addition, annunciator 38 may be disposed at the ground-based facility and may serve to alert maintenance personnel via visual and/or aural indication(s). In some embodiments, computer 36 and/or annunciator 38 may be incorporated in a desktop computer or a portable electronic device such as a laptop computer or a smart phone for example.

In some embodiments, an amount of utilization 40 of power plant 10 may be considered by computer 36 during the monitoring of lubrication system 12. Amount of utilization 40 may quantify a utilization of power plant 10 since entry into service, since the last overhaul, or since another maintenance task was performed on power plant 10. Amount of utilization 40 may include a number of operating hours of power plant 10, a number of flight cycles of power plant 10 and/or a number of calendar days since entry into service or since the last overhaul for example. Amount of utilization 40 may characterize an amount of the service life of power plant 10 that has been consumed and may also indicate a potential change (e.g., increase) in oil consumption by power plant 10 due to aging of power plant 10.

Amount of utilization 40 may be tracked by an electronic engine controller (EEC) of power plant 10 or via other means, and may be communicated to computer 36 via wired or wireless communication. The EEC may control one or more aspects of the performance of power plant 10. Alternatively, amount of utilization 40 may be determined by computer 36. In various embodiments, computer 36 may be the EEC of power plant 10 or may be separate from the EEC of power plant 10. In some embodiments, one or more sensors in communication with computer 36 may be operable to characterize amount of utilization 40 and provide signal(s) characterizing amount of utilization 40 to computer 36. Such sensor(s) may be operable to detect one or more engine and/or aircraft conditions and generate signals indicative of amount of utilization 40. In some embodiments, the sensor(s) may include an oil quantity sensor, oil temperature sensor, oil pressure sensor, engine speed sensor, aircraft altitude sensor, and aircraft attitude sensor for example. In some embodiments, such sensor(s) may be operable to determine a power setting of power plant 10, and/or an ambient condition, such as a temperature, pressure and/or altitude for example.

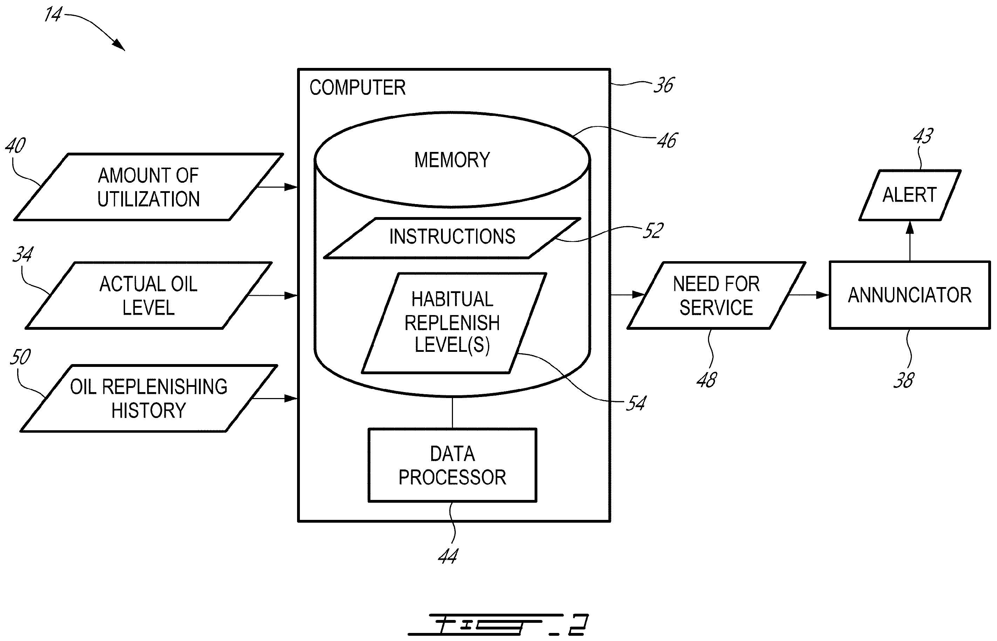

In embodiments where computer 36 is located remotely of the aircraft to which power plant 10 is mounted, actual oil level 34 may be communicated to computer 36 via a wireless communication network either during flight of the aircraft or when the aircraft is on the ground. In various embodiments, monitoring of lubrication system 12 by computer 36 may be performed substantially in real-time as the aircraft is in operation. Alternatively, monitoring of lubrication system 12 by computer 36 may be performed shortly after the completion of a flight cycle and before the initiation of a next flight cycle. As explained further below, computer 36 may consider whether actual oil level 34 is inconsistent with the oil replenishing history applicable to power plant 10 and cause (i.e., trigger) the annunciator 38 to output alert 43 (shown in FIG. 2) if appropriate. An actual oil level 34 that is inconsistent with the oil replenishing history may indicate that oil tank 26 was not replenished when it was expected to be replenished according to the oil replenishing history.

FIG. 2 is a schematic representation of apparatus 14 for monitoring lubrication system 12 of power plant 10. Computer 36 may include one or more data processors 44 (referred hereinafter in the singular as "processor 44") and non-transitory machine-readable memory(ies) 46 (referred hereinafter in the singular). Computer 36 may be configured to generate output 48 (i.e., signal, data) indicative of a need for servicing lubrication system 12 based on actual oil level 34 and optionally based on amount of utilization 40 and/or oil replenishing (i.e., service) history 50. Computer 36 may optionally also perform other tasks. Output 48 may include one or more (e.g., electronic or electric) signals communicated to annunciator 38 for causing (i.e., triggering) annunciator 38 to generate alert 43. Alert 43 may be a visual or aural indication (e.g., textual message, graphical icon, blinking light, audible alarm, chime, spoken message). Computer 36 may perform one or more procedures or steps defined by instructions 52 (e.g., software, program code) stored in memory 46 and executable by processor(s) 44 to generate output 48.

Processor(s) 44 may include any suitable device(s) configured to cause a series of steps to be performed by computer 36 so as to implement a computer-implemented process such that instructions 52, when executed by computer 36 or other programmable apparatus, may cause the functions/acts specified in the methods described herein to be executed. Processor(s) 44 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

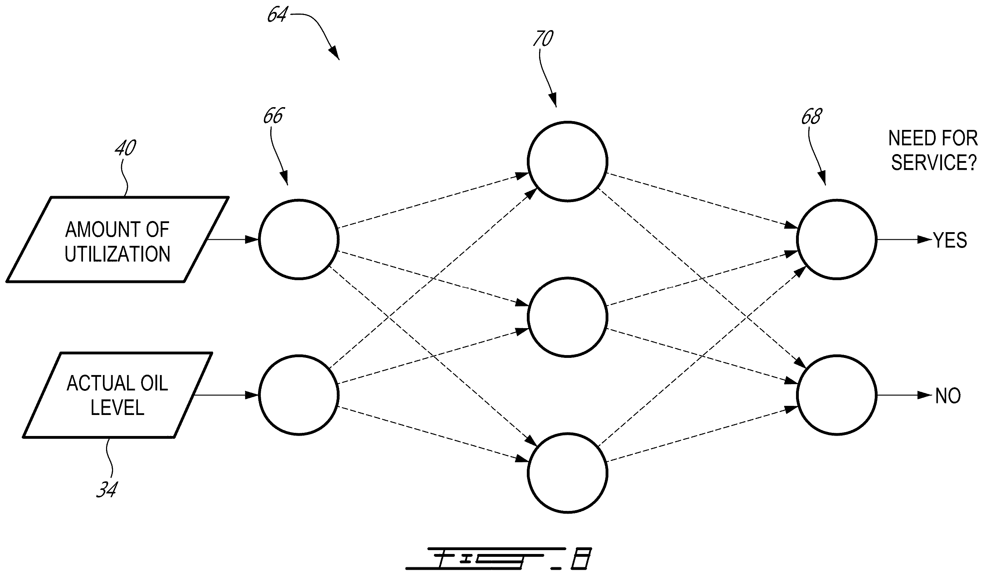

Memory 46 may include any suitable machine-readable storage medium. Memory 46 may include non-transitory computer-readable storage medium such as, for example, but not limited to, an electronic, magnetic, optical, electromagnetic, infrared, or semiconductor system, apparatus, or device, or any suitable combination of the foregoing. Memory 46 may include any storage means (e.g., devices) suitable for retrievably storing machine-readable instructions 52 executable by processor(s) 44. Memory 46 may store one or more predetermined habitual replenish levels 54 that are based on oil replenishing history 50, which may be different from service recommendations from a manufacturer of power plant 10. In some embodiments, instructions 52 may be configured to determine habitual replenish level(s) 54 using a machine learning (ML) or other algorithm(s). In some embodiments, instructions 52 may include one or more computer-implemented trained digital models such as ML algorithm 64 (shown in FIG. 8) also stored in memory 46.

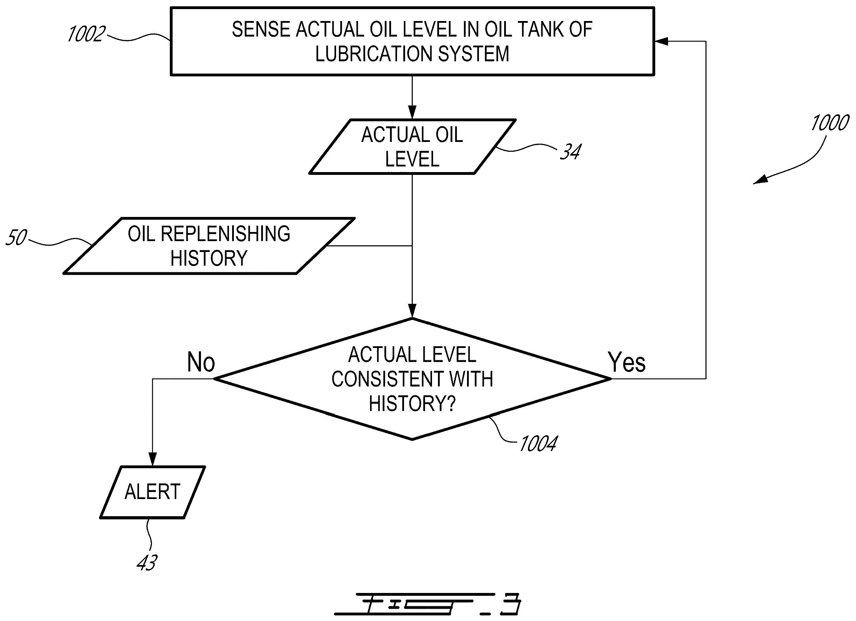

FIG. 3 is a flow diagram of an exemplary method 1000 of monitoring lubrication system 12 of power plant 10 or of another lubrication system. Method 1000 may be performed using apparatus 14 or using another apparatus. For example, machine-readable instructions 52 may be configured to cause computer 36 to perform at least part of method 1000. Method 1000 may include other actions disclosed herein. Method 1000 may include elements of power plant 10, of lubrication system 12 and/or of apparatus 14. In various embodiments, method 1000 may include:
sensing (e.g., with oil sensor 32) actual oil level 34 in oil tank 26 of lubrication system 12 (block 1002);
determining (e.g., using computer 36) whether actual oil level 34 is consistent with oil replenishing history 50 (decision block 1004); and
when actual oil level 34 is inconsistent with oil replenishing history 50, causing alert 43 to be output (e.g., via annunciator 38).

When actual oil level 34 is consistent with oil replenishing history 50, method 1000 may end or restart at block 1002. Method 1000 may be executed at prescribed intervals or continuously repeated in various situations. For example, method 1000 may be executed at start-up of power plant 10 and provide alert 43 if applicable before executing a new flight cycle. Method 1000 may be executed at the completion of a flight cycle and provide alert 43 if applicable to indicate that service of lubrication system 12 may be required before the next flight cycle.

In some embodiments, oil replenishing history 50 may include a sole habitual replenish level 54 being an oil level in oil tank 26 at which oil tank 26 is habitually replenished with oil (i.e., expected to be replenished with oil) by maintenance personnel. In some embodiments, oil replenishing history 50 may include a plurality of habitual replenish levels 54 respectively associated with different amounts of utilization 40 of power plant 10. In some embodiments, oil replenishing history 50 may include a plurality of actual oil levels 34 and computer 36 may determine habitual replenish level(s) 54 from the plurality of actual oil levels 34.

Oil replenishing history 50 may be selected to be relevant (i.e., applicable) to power plant 10 that is being monitored. For example, in some embodiments, oil replenishing history 50 may be the oil replenishing history of the very same power plant 10 including lubrication system 12 that is being monitored. In some embodiments, oil replenishing history 50 may include historical data from one or more other power plants. In some embodiments, oil replenishing history 50 may include historical data from power plant 10 and also from one or more other power plants. In some embodiments, oil replenishing history 50 may include historical data from a fleet of power plants 10 of a same type and family.

When oil replenishing history 50 includes historical data from other power plants, such other power plants may be selected based on a similarity in mission profiles compared to mission profile(s) of power plant 10. In other words, the oil replenishing history 50 of the other power plants may be selected because of similar flight cycles (e.g., similar durations, environmental conditions, payloads and altitudes) as power plant 10 so that oil replenishing history 50 may be relevant to power plant 10. In other words, the oil consumption that is inherent to oil replenishing history 50 may be expected to be substantially similar to that of power plant 10. Mission profiles may define the aircraft state and flight characteristics throughout various phases of flight, and may be an important consideration in the design of power plant 10 by defining the intended utilization of power plant 10.

In some embodiments, different oil replenishing histories may be populated based on different mission profiles and the appropriate oil replenishing history may be selected based on the mission requirement of power plant 10. Accordingly, the oil replenishing habits of maintenance personnel extracted from the appropriate oil replenishing history may indirectly capture the expected oil consumption of power plant 10 and be relied upon to detect a potential human error that could result in inadequate maintenance of power plant 10.

Determining whether actual oil level 34 is consistent with oil replenishing history 50 may include determining (e.g., with computer 36) that actual oil level 34 is below a habitual replenish level 54 which is higher than a minimum operating oil level for oil tank 26. When actual oil level 34 is below habitual replenish level 54 and higher than the minimum operating oil level, computer 36 may generate output 48 indicative of lubrication system 12 requiring service. Optionally, in response output 48 from computer 36, annunciator 38 may output (e.g., annunciate) alert 43.

In some embodiments, alert 43 may serve to initiate service of power plant 10. In some embodiments, method 1000 may include, when actual oil level is inconsistent with oil replenishing history 50, adding oil to oil tank 26 by maintenance personnel.

Various aspects of method 1000 are described below in reference to the subsequent figures.

FIG. 4 is a schematic representation of an exemplary configuration of oil sensor 32 operable to sense actual oil level 34 contained in oil tank 26 of lubrication system 12 of power plant 10. Oil sensor 32 may include float 56 that interacts with the oil contained in oil tank 26 and that is movable vertically along guide 58. Float 56 may float in the oil so that the vertical position of float 56 may indicate actual oil level 34 contained in oil tank 26. Float 56 may be operatively connected to a plurality of normally-open switches SW3-SW8 and cause the switch (e.g., SW5) that correspond to the vertical position of float 56 to close. Switches SW3-SW8 may be part of a resistive circuit where closing one switch while the others remain open may provide a predetermined resistance across the circuit to permit the identification of which switch is closed. The identity of the closed switch may in turn indicate actual oil level 34 inside of oil tank 26. Power plant 10 may not be permitted to fly if actual oil level 34 is below minimum operating level MIN.

During normal utilization of power plant 10, actual oil level 34 may permissibly vary between minimum operating level MIN corresponding to switch SW3 and maximum operating level MAX corresponding to switch SW8. Minimum operating level MIN and maximum operating level MAX may define a safe range of oil levels recommended by the manufacturer of power plant 10 for safe operation of power plant 10. In other words, when maintenance personnel inspects lubrication system 12, actual oil level 34 should always be kept above minimum operating level MIN and should not be overfilled beyond maximum operating level MAX.

Oil replenishing history 50 may show that oil tank 26 is normally replenished by maintenance personnel before reaching minimum operating level MIN. In the example shown in in FIG. 4, oil replenishing history 50 may show that oil tank 26 is normally replenished at habitual replenish level 54 corresponding to switch SW5 (shown in the closed state) that indicates actual oil level 34 that is above minimum operating level MIN and that is below maximum operating level MAX. Habitual replenish level 54 may be indicative of a historical oil consumption by power plant 10 and may also be indicative of an expected oil consumption (i.e., by maintenance personnel) associated with the next flight cycle(s) until the next inspection. In some embodiments, the actual oil consumption may be explicitly derived from oil replenishing history 50 and the utilization of power plant 10. However, in some embodiments, specifically quantifying the actual oil consumption may not be necessary and reliance of habitual replenish level 54 may be adequate to detect a potential human error in servicing lubrication system 12. Habitual replenish level 54 may be identified from oil replenishing history 50 as a value of actual oil level 34 that usually immediately precedes an increase in actual oil level 34.

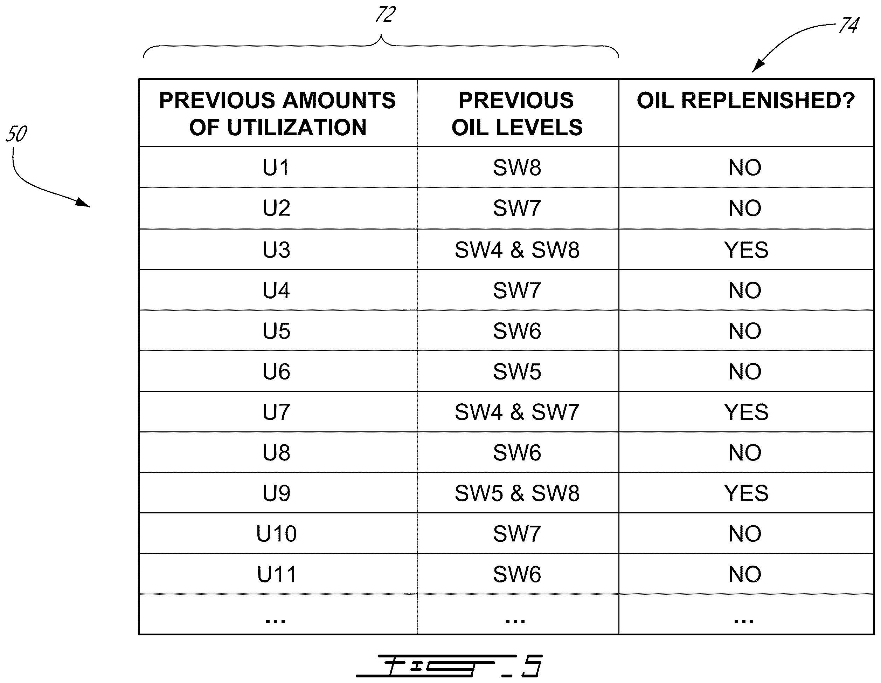

FIG. 5 shows a table of an exemplary oil replenishing history 50 that may be relevant to lubrication system 12 of power plant 10. Oil replenishing history 50 may be used by computer 36 to determine one or more habitual replenish levels 54. Oil replenishing history 50 may include a plurality of previous oil levels (SW3-SW8) respectively associated with corresponding previous amounts of utilization U1-U11 of power plant 10. Some previous amounts of utilization (e.g., U3, U7 and U9) may correspond to two oil levels and can thereby be identified as instances in which oil tank 26 or another oil tank was replenished. The lower of the two oil levels can be identified as an oil level at which oil tank 26 or another oil tank was replenished. For example, previous amount of utilization U3 may indicate that oil tank 26 or the other oil tank was replenished to oil level SW8 when the oil level was at SW4. Previous amount of utilization U7 may indicate that oil tank 26 or the other oil tank was replenished to oil level SW7 when the oil level was at SW4. Previous amount of utilization U9 may indicate that oil tank 26 or the other oil tank was replenished to oil level SW8 when the oil level was at SW5.

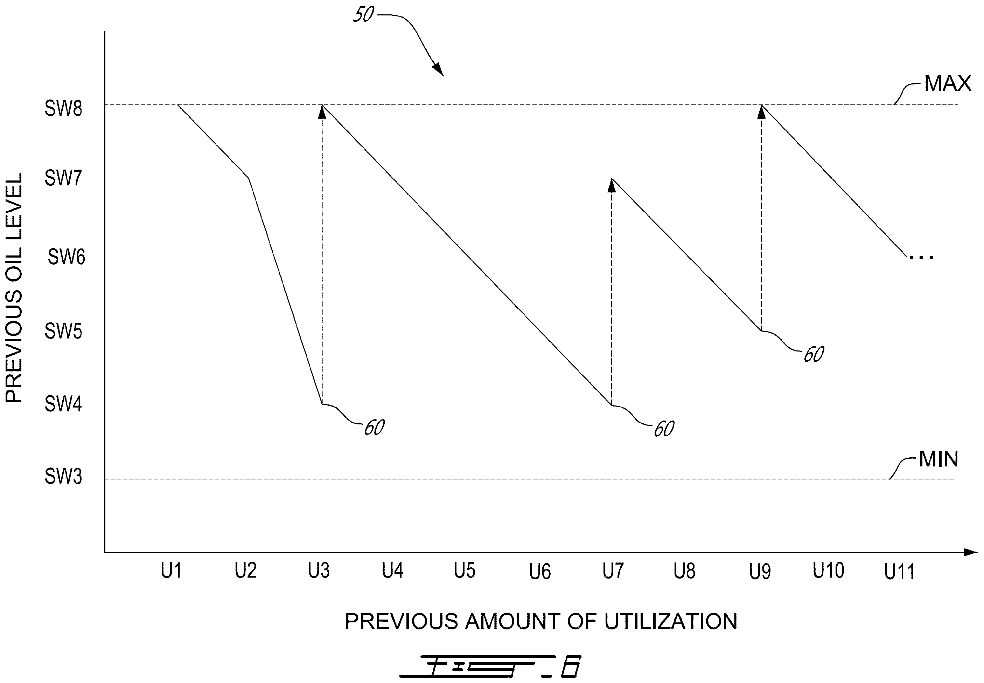

FIG. 6 shows a plot providing a graphical representation of oil replenishing history 50 of FIG. 5. Oil replenishing history 50 may be used by computer 36 to identify oil levels at which oil tank 26 or the other oil tank was replenished by way of identifying local minima 60 in a plurality of previous (i.e., historical) oil levels. The identification of local minima 60 can then be used to determine one or more habitual replenish levels 54 for use to monitor lubrication system 12. In some embodiments, a habitual replenish level 54 may be an average of a plurality of previous oil levels associated with local minima 60. In some embodiments, a habitual replenish level 54 may be a mode of a plurality of previous oil levels associated with local minima 60. In some embodiments, different habitual replenish levels 54 may be respectively determined for a plurality of utilization amounts to account for changes in oil consumption behaviour during the service life of power plant 10.

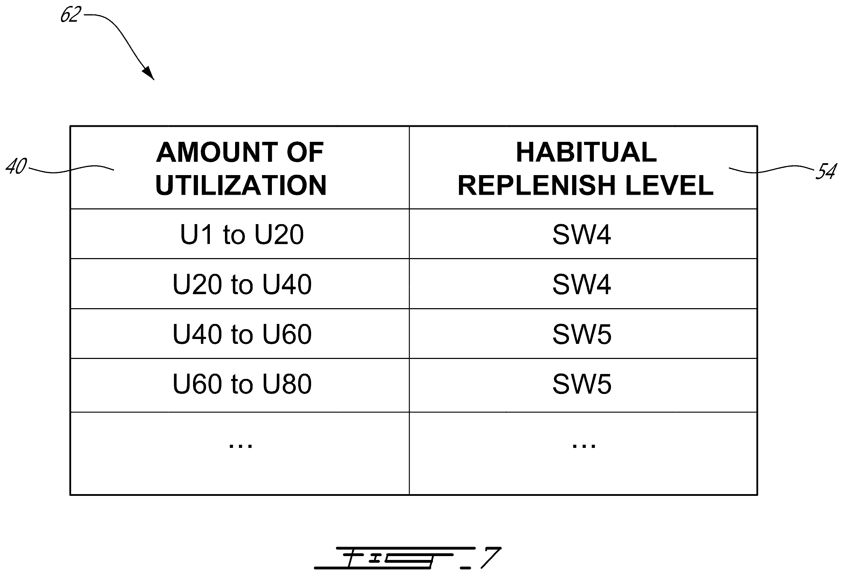

FIG. 7 shows a table of an exemplary digital schedule 62 that may be stored digitally in memory 46 of computer 36. In some embodiments of method 1000, computer 36 or another computer may, before determining that actual oil level 34 is below habitual replenish level 54, determine habitual replenish level(s) 54 based on oil replenishing history 50. Digital schedule 62 may be a digital look-up table that relates amounts of utilization 40 of power plant 10 to habitual replenish levels 54 at which oil tank 26 is expected to be replenished with oil based on oil replenishing history 50. In some embodiments, digital schedule 62 may be predetermined based on oil replenishing history 50 and provided for use by computer 36. Alternatively, digital schedule 62 may be populated by computer 36 based on oil replenishing history 50. Digital schedule 62 may be periodically updated by computer 36 or by another computer based on new data in oil replenishing history 50 from power plant 10 and/or from another power plant. For example, oil replenishing history 50 may be periodically updated with new records of service (e.g., oil replenishing) events performed on power plant 10 or on one or more other power plants.

Digital schedule 62 may be used by computer 36 to, before determining that actual oil level 34 is below habitual replenish level 54, determine habitual replenish level 54 as a function of amount of utilization 40. For example, computer 36 may retrieve the applicable habitual replenish level 54 from digital schedule 62 which relates amounts of utilization 40 to habitual replenish levels 54.

FIG. 8 schematically shows an exemplary ML algorithm 64 that relates amount of utilization 40 of power plant 10 and actual oil level 34 to a need for service (e.g., need for replenishing the oil in oil tank 26). In various embodiments of method 1000, ML algorithm 64 may be used instead of or in addition to digital schedule 62. ML algorithm 64 may be used to determine that actual oil level 34 is below habitual replenish level 54 by relating amount of utilization 40 and actual oil level 34 to a need for replenishing the oil. ML algorithm 64 may be trained using ML on oil replenishing history 50. In some embodiments, ML algorithm 64 may be pre-trained and provided to computer 36. In some embodiments, computer 36 may be used to train ML algorithm 64 on oil replenishing history 50.

ML algorithm 64 may include one or more suitable artificial intelligence models. In some embodiments, ML algorithm 64 may include a trained artificial neural network (ANN). Instructions 52 may be executable by processor 44 and configured to cause processor 44 to use ML algorithm 64, amount of utilization 40 and actual oil level 34 to determine whether actual oil level 34 sensed by oil sensor 32 is below habitual replenish level 54 that is higher than minimum operating level MIN for oil tank 26 (i.e., whether service of lubrication system 12 is expected). When actual oil level 34 is determined to be below habitual replenish level 54, instructions 52 may cause computer 36 to generate output 48 to cause annunciator 38 to output alert 43.

ML algorithm 64 may be a suitable type of mathematical model that, once trained on a dataset such as oil replenishing history 50, can be used to make predictions or classifications on new data (i.e., new amounts of utilization 40 and new actual oil levels 34). During training, a learning algorithm may iteratively adjust the model's internal parameters to minimize errors in its predictions. ML algorithm 64 may be a fully trained model with all its internal parameters tuned. Alternatively, ML algorithm 64 may be continuously or periodically trained through active leaning based on new data included in oil replenishing history 50.

The ANN of ML algorithm 64 may include interconnected data processing units (i.e., artificial neurons) grouped in different layers: one input layer 66, one output layer 68, and one or more hidden layers 70. The connections (i.e. synapses) between the neurons may have adaptive weights according to the connection strength between two neurons. The connections are used for data exchange between the neurons: the output of the neurons of one layer is used as the input of the neurons of the next layer. The ANN may be trained by adjusting the weights of the synapses until a set of given input values results in the desired output values.

During training of ML algorithm 64, previous amounts of utilization and previous oil levels of oil replenishing history 50 may be used as inputs 72 (shown in FIG. 5) to ML algorithm 64, and the indication of whether the oil was replenished may be uses as a corresponding output 74 (shown in FIG. 5). In some embodiments, ML algorithm 64 may be configured to perform (e.g., binary) classification. For example, ML algorithm 64 may output a first value (e.g., 1 or "YES") if actual oil level 34 is below the applicable habitual replenish level 54 and service is expected, or a second value (e.g., 0 or "NO") if actual oil level 34 is not below the habitual replenish level 54 and service is not expected.

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. An apparatus for monitoring a lubrication system of an aircraft power plant, the apparatus comprising:
a sensor operable to sense an actual oil level in an oil tank of the lubrication system of the aircraft power plant;
an annunciator; and
one or more computers in communication with the sensor and with the annunciator, the one or more computers being operable to:
determine that the actual oil level sensed by the sensor is below a habitual replenish level that is higher than a minimum operating level for the oil tank, the habitual replenish level being an oil level in the oil tank at which the oil tank is habitually replenished with oil based on a service history relevant to the aircraft power plant; and
when the actual oil level is below the habitual replenish level and above the minimum operating level, cause the annunciator to output an alert.

2. The apparatus as defined in claim 1, wherein the one or more computers are operable to, before determining that the actual oil level is below the habitual replenish level, determine the habitual replenish level as a function of an amount of utilization of the aircraft power plant that is associated with the actual oil level.

3. The apparatus as defined in claim 2, wherein determining the habitual replenish level as a function of the amount of utilization includes retrieving, using the one or more computers, the habitual replenish level from a digital schedule relating the amount of utilization to the habitual replenish level.

4. The apparatus as defined in claim 2, wherein:
determining that the actual oil level is below the habitual replenish level includes executing, by the computer, a machine learning algorithm that relates the amount of utilization and the actual oil level to a need for replenishing the oil;
the machine learning algorithm has been trained using machine learning on the service history; and
the service history includes previous amounts of utilization and previous oil levels at which the oil was replenished.

5. The apparatus as defined in claim 4, wherein the one or more computers are operable to train the machine learning algorithm on the service history.

6. The apparatus as defined in any preceding claim, wherein the service history relevant to the aircraft power plant includes a service history of the aircraft power plant, and/or
wherein the service history relevant to the aircraft power plant includes a service history of another aircraft power plant.

7. The apparatus as defined in any preceding claim, wherein the one or more computers are operable to, before determining that the actual oil level is below the habitual replenish level, determine the habitual replenish level based on the service history,
wherein, optionally, the service history includes a previous replenish level corresponding to a previous oil level at which the oil tank or another oil tank of another aircraft power plant was replenished with oil, and
wherein, optionally, the one or more computers are operable to determine the previous replenish level by identifying a local minimum among a plurality of previous oil levels.

8. A lubrication system of an aircraft power plant, the lubrication system comprising:
an oil tank operatively connected to supply oil to one or more lubrication loads of the aircraft power plant;
a sensor operable to sense an actual oil level in the oil tank;
an annunciator;
one or more data processors in communication with the sensor and with the annunciator; and
non-transitory machine-readable memory storing:
data indicative of an oil replenishing history applicable to the aircraft power plant; and
instructions executable by the one or more data processors and configured to cause the one or more data processors to, when the actual oil level is inconsistent with the oil replenishing history, cause the annunciator to output an alert.

9. The lubrication system as defined in claim 8, wherein the instructions are configured to cause the one or more data processors to:
before determining that the actual oil level is inconsistent with the oil replenishing history, determine a habitual replenish level as a function of an amount of utilization of the aircraft power plant that is associated with the actual oil level; and
determine that the actual oil level is below the habitual replenish level.

10. The lubrication system as defined in claim 9, wherein the instructions are configured to cause the one or more data processors to determine the habitual replenish level by retrieving the habitual replenish level from a digital schedule stored in the non-transitory machine-readable memory and that relates the amount of utilization to the habitual replenish level.

11. The lubrication system as defined in claim 9, wherein:
the instructions are configured to cause the one or more data processors to, determine that the actual oil level is below the habitual replenish level by executing a machine learning algorithm that relates the amount of utilization and the actual oil level to a need for replenishing the oil; and
the machine learning algorithm has been trained using machine learning on the oil replenishing history.

12. A method of monitoring a lubrication system of an aircraft power plant, the method comprising:
sensing, with a sensor, an actual oil level in an oil tank of the lubrication system of the aircraft power plant;
receiving, at a computer, data indicative of the actual oil level in the oil tank sensed by the sensor;
determining, with the computer, that the actual oil level is below a habitual replenish level higher than a minimum operating oil level for the oil tank, the habitual replenish level being an oil level in the oil tank at which the oil tank is habitually replenished with oil based on an oil replenishing history relevant to the aircraft power plant;
when the actual oil level is below the habitual replenish level and higher than the minimum operating oil level, generate, with the computer, an output indicative of the lubrication system requiring service; and
in response to the output from the computer, annunciating an alert.

13. The method as defined in claim 12, comprising:
receiving, at the computer, data indicative of an amount of utilization of the aircraft power plant that is associated with the actual oil level; and
before determining that the actual oil level is below the habitual replenish level, determining, with the computer, the habitual replenish level as a function of the amount of utilization, and
wherein the method optionally further comprises retrieving, by the computer, the habitual replenish level from a digital schedule relating the amount of utilization to the habitual replenish level.

14. The method as defined in claim 12, wherein:
determining that the actual oil level is below the habitual replenish level includes executing, by the computer, a machine learning algorithm that relates the amount of utilization and the actual oil level to a need for replenishing the oil; and
the machine learning algorithm has been trained using machine learning on the oil replenishing history.

15. The method as defined in claim 14, comprising training, with the computer, the machine learning algorithm on the oil replenishing history,
optionally wherein:
the oil replenishing history includes previous amounts of utilization and previous oil levels at which the oil was replenished; and
the method includes identifying, with the computer, previous oil levels at which the oil was replenished.
